# EUROPÄISCHE PATENTSCHRIFT

(11) **EP 1 026 838 B1**
(45) Veröffentlichungstag und Bekanntmachung des Hinweises auf die Patenterteilung: **01.06.2016**
(21) Anmeldenummer: 00102633.5
(22) Anmeldetag: 08.02.2000
(51) Int. Cl.: H04B 10/114, H04B 10/27, H04B 10/278

(54) **Infrarote Kommunikationsanordnung**
Infrared communication device
Dispositif de communication infrarouge

(30) Priorität: 08.02.1999 DE 19905051
(43) Veröffentlichungstag der Anmeldung: 09.08.2000
(73) Patentinhaber: Unify GmbH & Co. KG, 81379 München (DE)
(72) Erfinder: Lügger, Volker, 58730 Fröndenberg (DE)
(74) Vertreter: Fritzsche, Thomas

(56) Entgegenhaltungen:
- EP-A- 0 369 188
- EP-A- 0 613 315
- DE-A- 19 618 535
- US-A- 4 580 291
- US-A- 4 809 361
- US-A- 5 986 790
- PATENT ABSTRACTS OF JAPAN Bd. 1998, Nr. 01, 30. Januar 1998 (1998-01-30) -& JP 09 247094 A (FUJI XEROX CO LTD), 19. September 1997 (1997-09-19)

## Beschreibung

Die Erfindung betrifft eine Kommunikationsanordnung, welche sich besonders günstig in Patienten- oder Pflegebereichen, wie beispielsweise in Krankenhäusern, Sanatorien oder in Altenheimen einsetzen läßt, weil sie sich dort durch Nutzung einer bereits vorhandenen, in Teilbereichen gesetzlich vorgeschriebenen Infrastruktur installieren läßt.

Eine bekannte derartige Kommunikationsanordnung wird derzeit von der Firma Siemens Aktiengesellschaft unter der Bezeichnung HiMED auch in Kombination mit dem Lichtruf für Krankenhäuser vermarktet und besteht aus einer Mehrzahl kombinierter Kommunikationsbusse, welche in Verbindung mit über den Patientenzimmern angebrachten Signalleuchten Informationen übermitteln. Angaben dazu erhält man unter der Internetadresse: http://www.siemens.de/ic/networks/pn_neu/an_de/himed/refsol/h imain.htm.

Aus der EP-A-0 613 315 ist ein verfahren zur leitungsgebunden digitalen Nachrichtenübertragung bekannt, bei dem der Anschluss von Teilnehmer an ein Fernmeldenetz unter Nutzung von optisch/elektrischen Übertragungselementen offenbart ist.

Aus der US-A-5 986 790 und der US-A-4 809 361 sind Übertragungsanordnungen bekannt, bei denen optische Sende-/Empfangseinrichtungen einzelnen über einen Bus angeschlossen werden.

Die der Erfindung zugrundeliegende Aufgabe besteht darin, eine flexibel konfigurierbare Kommunikationsanordnung und eine Kommunikationseinrichtung anzugeben, welche sich einfach ohne aufwendige Baumaßnahmen in Gebäuden installieren läßt.

Diese Aufgabe wird gemäß den Merkmalen des Patentanspruches 1 durch eine Busanordnung zur Kommunikation und gemäß den Merkmalen des Patentanspruches 5 durch eine Kommunikationseinrichtung gelöst.

Weiterbildungen der Erfindung ergeben sich aus den abhängigen Ansprüchen.

Vorteilhaft ist eine Busanordnung, welche aus mindestens drei Kommunikationsbussen unterschiedlicher Hierarchie besteht, wobei ein Bus in Form von Lichtwellenkommunikationseinrichtungen ausgeführt ist, was dazu führt, daß die mit Hilfe der Lichtwellenkommunikationseinrichtungen angekoppelten weiteren Busse einfach konfigurierbar sind und zu beliebigen Untereinheiten zusammengefaßt werden können. Weiterhin besteht der Vorteil dieser Einrichtung darin, daß bei der Installation des Busses auf aufwendige Kabelverlegungsmaßnahmen verzichtet werden kann. Besonders vorteilhaft werden bei einer Weiterbildung der beschriebenen Anordnung die Bussystem in alternierender Weise durch Lichtwellenkommunikationsmittel aneinandergekoppelt, da auf diese Weise ein höchst mögliches Maß an flexibler Konfigurerierbarkeit des so entstehenden Busses gewährleistet wird.

Vorteilhaft wird bei einer Weiterbildung der beschriebenen Busanordnung diese auf die Kommunikationshierarchie eines Krankenhauses abgebildet, in dem Zimmerbusse und Stationsbusse, die durch einen Gruppenbus miteinander verbunden sind, aneinandergekoppelt sind, wobei der Stationsbus als auf Lichtwellenübertragung basierender Kommunikationsbus ausgebildet ist, was den Vorteil hat, daß sich die unterschiedlichen Zimmer unabhängig von der Ausführung des Stationsbusses zu beliebigen Gruppen zusammenfassen lassen, wodurch die Einrichtungen des Krankenhauses mit Hinblick auf die Zimmer- und Bettenbelegung besser genutzt werden.

Vorteilhaft wird bei einer Weiterbildung der beschriebenen Anordnung der Bus auf Basis von Lichtwellenkommunikation aus mindestens zwei aufeinander ausgerichteten Lichtwellenkommunikationseinrichtungen aufgebaut.

Besonders vorteilhaft kommen Lichtwellenkommunikationseinrichtungen zum Einsatz, an denen mindestens zwei Lichtwellengebereinrichtungen und zwei Lichtwellenempfangseinrichtungen angeordnet sind, weil sich aus diesen mit minimalem technischem Aufwand ein Lichtwellenkommunikationsbus aufbauen läßt.

Vorteilhaft sind bei einer Lichtwellenkommunikationseinrichtung mindestens eine Lichtwellengebereinrichtung und eine Lichtwellenempfangseinrichtung beweglich angeordnet, da sich auf diese Weise räumlich unterschiedlich angeordnete Lichtwellenkommunikationsanordnungen durch die Ausrichtung ihrer beweglich angeordneten Bestandteile miteinander in Verbindung bringen lassen.

Besonders vorteilhaft sieht es eine Weiterbildung der beschriebenen Lichtwellenkommunikationseinrichtung vor, daß sie in Kombination mit einer bereits vorhandenen Signalleuchte angeordnet wird, weil a) Signalleuchten bereits so installiert sind, daß sie gut sichtbar sind, b) Steuer- und Stromversorgungseinrichtungen für die Signalleuchte auch für die Lichtwellenkommunikationseinrichtung genutzt werden können.

Besonders vorteilhaft sieht es eine Weiterbildung der beschriebenen Lichtwellenkommunikationseinrichtung vor, daß das Einschalten einer Signalleuchte dazu führt, daß die Lichtwellenkommunikationseinrichtung in Gang gesetzt wird, weil auf diese Weise lediglich ein auslösendes Ereignis für die Einleitung von zwei Kommunikationsvorgängen benötigt wird.

Vorteilhaft arbeitet eine Weiterbildung der beschriebenen Lichtwellenkommunikationseinrichtung im Infrarotbereich, da so störende Lichtreflexionen vermieden werden.

Besonders vorteilhaft ist eine Lichtwellenkommunikationseinrichtung in Verbindung mit einer Busanordnung, um diese flexibel konfigurierbar ausgestalten zu können.

Im Folgenden werden Ausführungsbeispiele der Erfindung anhand von Figuren weiter erläutert.
- Figur 1: zeigt dabei eine beispielhafte Busanordnung,
- Figur 2: zeigt einen Bus, der Kommunikation auf Lichtwellenbasis ermöglicht,
- Figur 3: zeigt ein Beispiel einer Lichtwellenkommunikationseinrichtung
- Figur 4: zeigt eine Detailansicht einer Lichtwellenkommunikationseinrichtung.

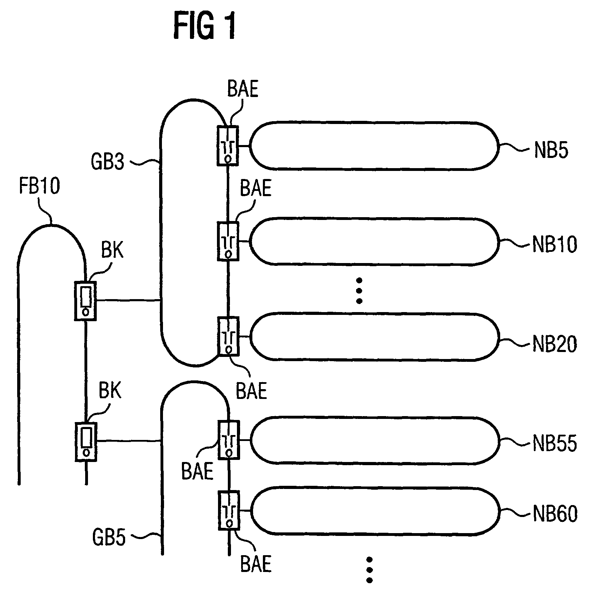

Wie Figur 1 zeigt, besteht eine beispielhafte Busanordnung aus Nahbereichsbussen NB5 bis NB60, Mittelbereichsbussen GB3 und GB5 und einem Fernbereichsbus FB10. Die Nahbereichsbusse sind über Busanschlußeinrichtungen BAE an die Mittelbereichsbusse GB angekoppelt, während die Mittelbereichsbusse GB über Buskoppler BK an den Fernbereichsbus FB angeschlossen sind. In Krankenhäusern ist der Nahbereichsbus beispielsweise als Zimmerbus der Mittelbereichsbus beispielsweise als Stationsbus und der Fernbereichsbus als Gruppenbus ausgeführt. Bei den Busanschlußeinheiten BAE handelt es sich um Lichtrufeinrichtungen, die aus Signalleuchten bestehen, wobei von den Zimmerbussen aufgenommene Kommunikationssignale wie beispielsweise Patientenalarm oder Schwesternruf o.ä. über den Mittelbereichsbus GB an den Fernbereichsbus FB weitergegeben werden.

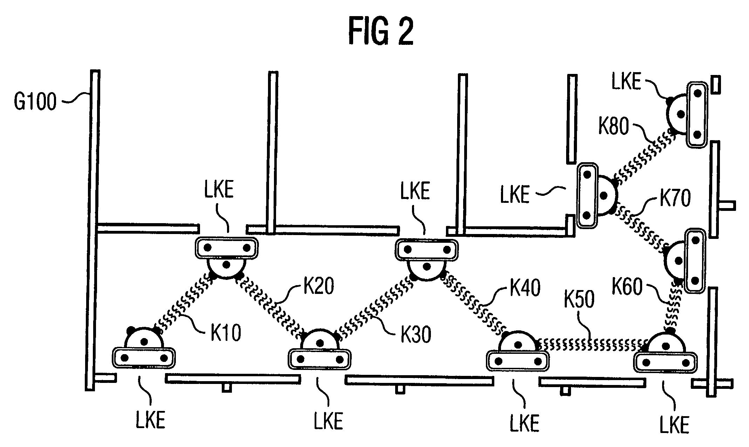

Figur 2 zeigt am Beispiel eines Grundrisses G100 einer Pflegeeinrichtung. In dieser Pflegeeinrichtung sind beispielsweise Kommunikationseinrichtungen LKE vorhanden, welche in Sichtverbindung zueinander stehen und aus denen sich, wie man erkennen kann, ein Bus auf Basis von Lichtwellenkommunikationseinrichtungen aufbauen läßt. Der Bus, welcher beispielsweise der Mittelbereichsbus GB einer Pflegeeinrichtung sein kann, wird hier durch die Kommunikationsstrecken K10 bis K80 repräsentiert. Durch die Richtungspfeile wird die Bidirektionalität der möglichen Kommunikationsverbindungen angedeutet. Aus den unterschiedlichen Winkellagen der Kommunikationsstrecken K zueinander kann auch erkannt werden, daß die Geber und Empfangseinrichtungen der Lichtwellenkommunikationseinrichtungen LKE variabel aufeinander ausrichtbar sind. Leicht ist aus dieser Darstellung auch erkennbar, daß, weil keine drahtgebundene Verbindung zwischen den einzelnen Kommunikationseinrichtungen vorhanden ist, diese sich zu beliebigen Gruppen zusammenfassen lassen.

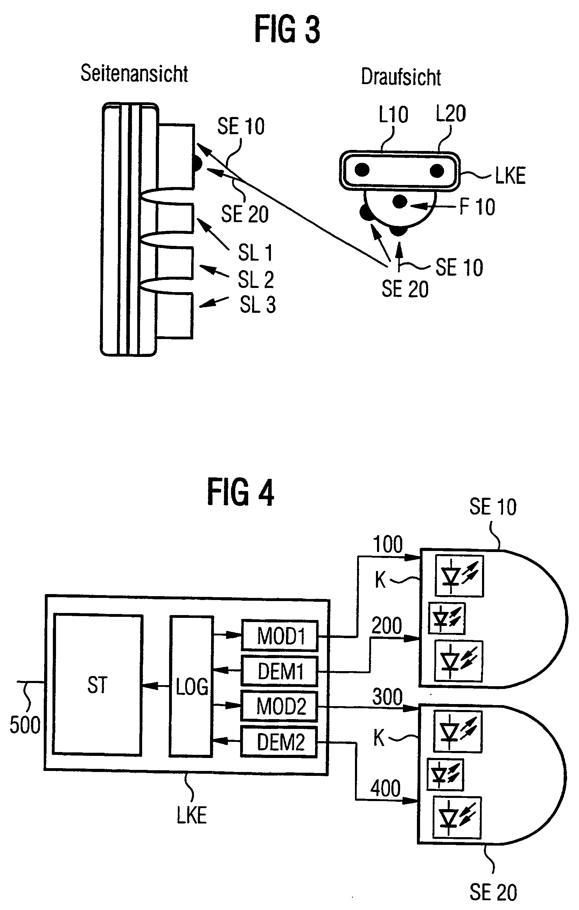

Figur 3 zeigt ein Beispiel einer Seitenansicht und einer Draufsicht von einer Lichtwellenkommunikationseinrichtung LKE. Beispielsweise besteht diese Lichtwellenkommunikationseinrichtung LKE aus Sende-Empfangseinrichtungen SE10 und SE20, die beweglich an der Lichtwellenkommunikationseinriertung angeordnet sind und die beispielsweise durch eine Fixiereinrichtung F10 in ihrer ausgerichteten Position fixiert werden können.

Vorteilhaft können diese Lichtwellenkommunikationseinrichtungen in Kombination mit derzeit beim Stand der Technik bereits verwendeten Signalleuchten SL1 bis SL3 eingesetzt werden. Falls SL1 aufleuchtet, die beispielsweise als gelbe Lampe ausgeführt ist, bedeutet dies, daß ein Arzt anwesend ist. Falls SL2 aufleuchtet, die beispielsweise grün ausgeführt ist, bedeutet dies, daß eine Schwester sich im Raum hinter der Signalleuchte aufhält. Eine rot blinkende Signalleuchte SL3 bedeutet, daß ein Notfall vorliegt.

Vorteilhaft wird diese Lichtwellenkommunikationseinrichtung beispielsweise so ausgeführt, daß ein Abstrahlbereich von 180° möglich ist, wodurch eine optimale Ausrichtung der Sende- und Empfangseinrichtungen SE aufeinander möglich ist und die Signalleuchten SL von überallher leicht erkannt werden können. Bevorzugt können diese Signalleuchten auch in Form von Leuchtdioden ausgeführt sein. In der Draufsicht sind Anzeigevorrichtungen L10 und L20 erkennbar, welche bevorzugt zur Kontrolle der optimalen Ausrichtung der Sende- und Empfangseinrichtungen SE10 und SE20 dienen können.

Bevorzugt kann eine solche Lichtwellenkommunikationseinrichtung modular ausgeführt sein und die Platine für die Ansteuerung der Signalleuchte SL bereits Aufnahmen für die Ansteuerung der Sende- und Empfangseinrichtungen SE vorsehen. Insbesondere kann auf diese Weise sichergestellt werden, daß Signale, welche die Signalleuchten SL ansteuern, auch für Kommunikationsvorgänge über die Lichtwellenkommunikationseinrichtung genutzt werden können. In Einzelfällen kann es auch vorgesehen sein, daß eine solche Lichtwellenkommunikationseinrichtung LKE ohne Signalleuchten ausgeführt ist, und lediglich der Wiederverstärkung und Weitergabe eingehender Lichtsignale dient.

Wie Figur 4 zeigt, erhält eine Lichtwellenkommunikationseinrichtung LKE beispielsweise ihre Signale über eine Eingangsleitung 500. Diese Lichtwellenkommunikationseinrichtung kann beispielsweise zum Aufbau eines Busses, der Kommunikation auf Basis von Lichtwellen ermöglicht, genutzt werden. In einer Steuereinrichtung ST wird beispielsweise das eingehende Signal daraufhin untersucht, welche Signalleuchte, bzw. welches Signal beispielsweise für einen Nahbereichsbus NB abgegeben wurde. In einer Auswertelogik LOG werden diese Signale im Sendefall von Modulatoren und im Empfangsfall von Demodulatoren MOD und DEM für die jeweiligen Sende-Empfangseinrichtungen SE10 und SE20 verarbeitet. Diese kommunizieren über Steuerleitungen 100 bis 400. Über Kontrolleinrichtungen K kann beispielsweise die Stärke eingehender Signale festgestellt werden. Die Steuerlogik LOG sorgt beispielsweise auch dafür, daß in Abhängigkeit einzelner eingehender Signale die Signalleuchten SL, welche hier nicht dargestellt sind, angesteuert werden. Ebenfalls kann die Lichtwellenkommunikationseinrichtung LKE durch weitere Bestandteile, wie beispielsweise Bewegungsmelder, Lichtschranken oder ähnliches ergänzt werden.

## Patentansprüche

1. Busanordnung zur Kommunikation,
a) mit mindestens einem ersten Nahbereichsbus (NB) zum Anschluß von Kommunikationsgeräten,
b) mit mindestens einem zweiten Mittelbereichsbus (GB) zur Verbindung von mindestens zwei Nahbereichsbussen,
c) mit mindestens einem Fernbereichsbus (FB) zur Verbindung von mindestens zwei Mittelbereichsbussen,
d) bei der mindestens zwei der Busse drahtgebunden ausgeführt sind und ein dritter eine leitungslose Kommunikation auf Lichtwellenbasis ermöglicht.

2. Busanordnung nach Anspruch 1,
bei welcher der Mittelbereichsbus Kommunikation auf Lichtwellenbasis ermöglicht.

3. Busanordnung nach einem der vorangehenden Ansprüche,
die in einer Pflegeeinrichtung für pflegebedürftige Personen angeordnet ist, wobei der Nahbereichsbus (NB) als Zimmerbus, der Mittelbereichsbus (GB) als Stationsbus und der Fernbereichsbus (FB) als Gruppenbus ausgeführt ist.

4. Busanordnung nach einem der vorhergehenden Ansprüche,
bei der mindestens zwei Lichtwellenkommunikationseinrichtungen (LKE) die Kommunikation auf Lichtwellenbasis ermöglichen.

5. Lichtwellenkommunikationseinrichtung (LKE) für Bussysteme, an der mindestens je zwei Lichtwellengebereinrichtungen und zwei Lichtwellenempfangseinrichtungen (SE10, SE20) zur leitungslosen Lichtwellenkommunikation angeordnet sind.

6. Lichtwellenkommunikationseinrichtung (LKE) nach Anspruch 5, bei der mindestens je eine Lichtwellengebereinrichtung (SE10) und je eine Lichtwellenempfangseinrichtung (SE20) bewegbar angeordnet sind, so daß sie für den Empfang und/oder das Senden von Lichtwellen von, bzw. zu einer Lichtwellenkommunikationseinrichtung (LKE) ausrichtbar sind.

7. Lichtwellenkommunikationseinrichtung nach einem der Ansprüche 5 oder 6,
die in Kombination mit mindestens einer Signalleuchte (SL) angeordnet ist.

8. Lichtwellenkommunikationseinrichtung nach Anspruch 7,
bei der das Einschalten der Signalleuchte zur Abgabe eines Lichtwellenkommunikationssignales über die Lichtwellenkommunikationseinrichtung führt.

9. Lichtwellenkommunikationseinrichtung nach einem der Ansprüche 5 bis 8,
die im Infrarotbereich arbeitet.

10. Bussystem nach Anspruch 4 in Verbindung mit einer Lichtwellenkommunikationseinrichtung nach einem der Ansprüche 5 bis 9.

## Claims

1. Bus arrangement for communication,
a) with at least one local area bus (NB) for connecting communication terminals,
b) with at least one second middle area bus (GB) for connecting at least two local area busses,
c) with at least one remote area bus (FB) for connecting at least two middle area buses,
d) where at least two of the buses are configured so as to be connected by wire, and a third bus allows for wireless communication on the basis of light waves.

2. Bus arrangement according to claim 1, wherein the middle area bus allows for communication on the basis of light waves.

3. Bus arrangement according to one of the preceding claims arranged in an institution for people in need of care, whereby the local area bus (NB) is configured as a room bus, the middle area bus (GB) as a station bus, and the remote area bus (FB) as a group bus.

4. Bus arrangement according to one of the preceding claims, where at least two light wave communication means (LKE) allow for the communication on the basis of light waves.

5. Light wave communication means (LKE) for bus systems, where at least two light wave transmitting devices each and two light wave receiving devices each (SE10, SE20) are arranged for wireless light wave communication.

6. Light wave communication means (LKE) according to claim 5, where at least one light wave transmitting device each (SE10) and one light wave receiving device each (SE20) are movably arranged, making them directable for receiving and/or transmitting light waves of, or towards a light wave communication means (LKE).

7. Light wave communication means according to one of the claims 5 or 6, arranged in combination with at least one signal light (SL).

8. Light wave communication means according to claim 7, where switching on the signal light for transmitting a light wave communication signal is carried out over the light wave communication means.

9. Light wave communication means according to one of the claims 5 to 8, which works in the infrared range.

10. Bus system according to claim 4 in conjunction with a light wave communication means according to one of the claims 5 to 9.

## Revendications

1. Dispositif de bus pour la communication,
a) avec au moins un premier bus d'action immédiate (NB) pour le branchement à des appareils de communication,
b) avec au moins un second bus d'action moyenne (GB) pour la liaison d'au moins deux bus de champ proche,
c) avec au moins un bus d'action lointaine (FB) pour la liaison d'au moins deux bus d'action moyenne,
d) dans lequel au moins deux des bus sont exécutés sous forme filaire et un troisième permet une communication sans fil sur la base d'ondes lumineuses.

2. Dispositif de bus de communication selon la revendication 1,
dans lequel le bus d'action moyenne permet une communication sur la base d'ondes lumineuses.

3. Dispositif de bus de communication selon l'une quelconque des revendications précédentes, qui est disposé dans une installation de soins pour des personnes exigeant des soins, moyennant quoi le bus d'action immédiate (NB) est exécuté en tant que bus de chambre, le bus d'action moyenne (GB) en tant que bus de station et le bus d'action lointaine (FB) en tant que bus de groupe.

4. Dispositif de bus de communication selon l'une quelconque des revendications précédentes, dans lequel au moins deux agencements de communication à ondes lumineuses (LKE) peimettent la communication sur la base d'ondes lumineuses.

5. Agencement de communication à ondes lumineuses (LKE) pour des systèmes de bus, auquel sont associés au moins deux agencements d'émission d'ondes lumineuses et deux agencements de réception d'ondes lumineuses (SE10, SE20) pour la communication à ondes lumineuses sans fil.

6. Agencement de communication à ondes lumineuses (LKE) selon la revendication 5, dans lequel au moins un agencement d'émission d'ondes lumineuses (SE10) et un agencement de réception d'ondes lumineuses (SE20) sont disposés mobiles de sorte qu'ils peuvent être orientés pour la réception et/ou l'émission d'ondes lumineuses par respectivement vers un agencement de communication à ondes lumineuses (LKE).

7. Agencement de communication à ondes lumineuses selon l'une quelconque des revendications 5 ou 6,
qui est disposé en combinaison avec au moins une source de signaux lumineux (SL).

8. Agencement de communication à ondes lumineuses selon la revendication 7, dans lequel la mise sous tension de la source de signaux lumineux entraîne l'émission d'un signal de communication à ondes lumineuses par le biais de l'agencement de communication à ondes lumineuses.

9. Agencement de communication à ondes lumineuses selon l'une quelconque des revendications 5 à 8, qui travaille dans le domaine des infrarouges.

10. Système de bus selon la revendication 4 en liaison avec un agencement de communication à ondes lumineuses selon l'une quelconque des revendications 5 à 9.
